# EUROPEAN PATENT APPLICATION

(11) **EP 4 555 841 A1**
(43) Date of publication of application: **21.05.2025**
(21) Application number: 23210664.1
(22) Date of filing: 17.11.2023
(51) Int. Cl.: A01B 3/46, A01B 69/00, A01B 69/04, A01B 79/00

(54) **A CONTROLLER FOR A PLOUGH, A PLOUGH SYSTEM AND ASSOCIATED METHODS**

(71) Applicant: Overum Industries AB, 594 72 Överum (SE)
(72) Inventor: HERTZOG, Daniel, 590 96 Överum (SE)
(74) Representative: Heuking Kühn Lüer Wojtek PartGmbB

(57) **Abstract**

A controller for a plough that is being propelled by a tractor. The controller is configured to receive adjacent last furrow information, which represents the width and / or depth of the last furrow of an earlier ploughing run that is adjacent to the furrows being created as part of a current ploughing run. The controller is also configured to determine a first furrow width setting for the plough based on the received adjacent last furrow information in order to overfill or underfill the last furrow of the earlier ploughing run that is adjacent to the furrows being created as part of the current ploughing run.

## Description

### Background of the Invention

The present disclosure relates to a controller for a plough that can automatically determine a first furrow width setting of the plough in order to overfill the last furrow of an earlier ploughing run.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clodhandling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset from each other when the plough is in use. Each plough body is connected to the plough frame via corresponding beams. The plough frame, in turn, is connected to a towing or pushing vehicle via a hitch arranged at a front or back end of the frame.

Most modern ploughs are of the reversible type, in which the main frame is rotatable by 180 degrees (i.e. reversed) with respect to the headstock. A turning cylinder attached to the headstock may be used to rotate (reverse) the plough. During rotation of the main frame, a first set of plough bodies, which was initially arranged below the main frame (first configuration), is transferred to the top of the main frame. At the same time, a second set of plough bodies, which was initially arranged on top of the main frame, is then transferred to a position below the main frame. The reversible plough is then in its second configuration. The main frame may be repeatedly rotated (reversed) between the first and second configuration, particularly during turning manoeuvres on the headlands. Whenever the plough is reversed, the first and second set of plough bodies swap position.

### Summary of the Invention

According to one aspect of the current disclosure, there is provided a controller for a plough that is being propelled by a tractor, wherein the controller is configured to:
receive adjacent last furrow information, which represents the width and / or depth of the last furrow of an earlier ploughing run that is adjacent to the furrows being created as part of a current ploughing run; and
determine a first furrow width setting for the plough based on the received adjacent last furrow information in order to overfill or underfill the last furrow of the earlier ploughing run that is adjacent to the furrows being created as part of the current ploughing run.

Advantageously, such a controller can determine the first furrow width setting such that it will result all of the furrows being evenly filled at a later time, for example after the soil has compacted, when a subsequent agricultural operation is to be performed. Therefore, the performance of the subsequent agricultural operation can be improved.

The controller may be configured to apply a scaling factor when determining the first furrow width setting to set by how much the last furrow of the earlier ploughing run is overfilled or underfilled.

The adjacent last furrow information may represent the width of the last furrow behind the tractor after a wheel of the tractor has driven through it as part of the current ploughing run, but before it is filled by ploughing a first furrow of a current ploughing run.

The controller may be further configured to:
receive a furrow width setting for the plough for the current working run; and
determine the first furrow width setting for the plough also based on the furrow width setting.

The adjacent last furrow information may represents the width and the depth of the last furrow of the earlier ploughing run.

The controller may be configured to:
receive a depth setting of the plough for the current ploughing run;
calculate the cross-sectional area of the last furrow of the earlier ploughing run based on: the width and the depth of the last furrow of the earlier ploughing run; and
determine the first furrow width setting for the plough based on the depth setting and the calculated cross-sectional area of the last furrow of the earlier ploughing run, such that a first plough body of the plough turns over more or less soil than the calculated cross-sectional area of the last furrow of the earlier ploughing run.

The controller may be further configured to:
determine a display control signal based on the determined first furrow width setting; and
provide the display control signal to a display screen such that the determined first furrow width setting is presented to an operator of the tractor.

The controller may be further configured to:
determine a first furrow control signal based on the determined first furrow width setting; and
provide the first furrow control signal to a lateral frame adjustment mechanism of the plough in order to automatically set the first furrow width setting for the plough.

The controller may be configured to:
receive soil type information, which represents a type of soil that is being ploughed during the current ploughing run; and
determine the first furrow width setting for the plough also based on the received soil type information.

The controller may be configured to:
receive compaction information, which represents a compaction of soil that is being ploughed during the current ploughing run; and
determine the first furrow width setting for the plough also based on the received compaction information.

The controller may be configured to:
receive humidity information, which represents the humidity of the air in the vicinity of the plough during the current ploughing run; and
determine the first furrow width setting for the plough also based on the received humidity information.

The controller may be configured to:
receive residue information, which represents the amount and / or type of residue in soil that is being ploughed during the current ploughing run; and
determine the first furrow width setting for the plough also based on the received residue information.

There is also disclosed a plough system comprising:
a plough;
any controller disclosed herein; and
a sensor system configured to provide the adjacent last furrow information to the controller.

The sensor system may comprise:
an imaging sensor that is configured to acquire images of the last furrow of an earlier ploughing run that is adjacent to the furrows being created as part of a current ploughing run; and
a processor configured to process the acquired images in order to determine the adjacent last furrow information.

There is also disclosed a computer implemented method of operating a plough that is being propelled by a tractor, the method comprising:
receiving adjacent last furrow information, which represents the width and / or depth of the last furrow of an earlier ploughing run that is adjacent to the furrows being created as part of a current ploughing run; and
determining a first furrow width setting for the plough based on the received adjacent last furrow information in order to overfill or underfill the last furrow of the earlier ploughing run that is adjacent to the furrows being created as part of the current ploughing run.

There may be provided a computer program, which when run on a computer, causes the computer to configure any apparatus, including a system, a controller, or a processor disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as nonlimiting examples. The software may be an assembly program.

The computer program may be provided on a computer readable medium, which may be a physical computer readable medium such as a disc or a memory device, or may be embodied as a transient signal. Such a transient signal may be a network download, including an internet download.

### Brief Description of the Drawings

One or more embodiments of the present disclosure will now be described by way of example only, with reference to the accompanying drawings, in which:
Figure 1A shows a right-side view of an agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a work area;
Figure 3 shows an example image of a plough while it is working in the field, with various operating characteristics of the plough are labelled;
Figure 4 illustrates an example embodiment of a controller for a plough that is being propelled by a tractor according to an embodiment of the present disclosure;
Figures 5A to 5D illustrate schematically how a first furrow width setting of a plough according to an embodiment of the present disclosure can overfill the last furrow of an earlier ploughing run;
Figure 6 shows a schematic representation of a headstock region of an agricultural plough implement;
Figures 7a and 7b illustrate schematic cross-sectional views through six furrows that have been filled with soil and a neighbouring empty furrow;
Figure 8 illustrates another example embodiment of a controller for a plough that is being propelled by a tractor according to an embodiment of the present disclosure; and
Figure 9 illustrates schematically a computer-implemented method of operating a plough according to an embodiment of the present disclosure.

### Detailed Description of the Drawings

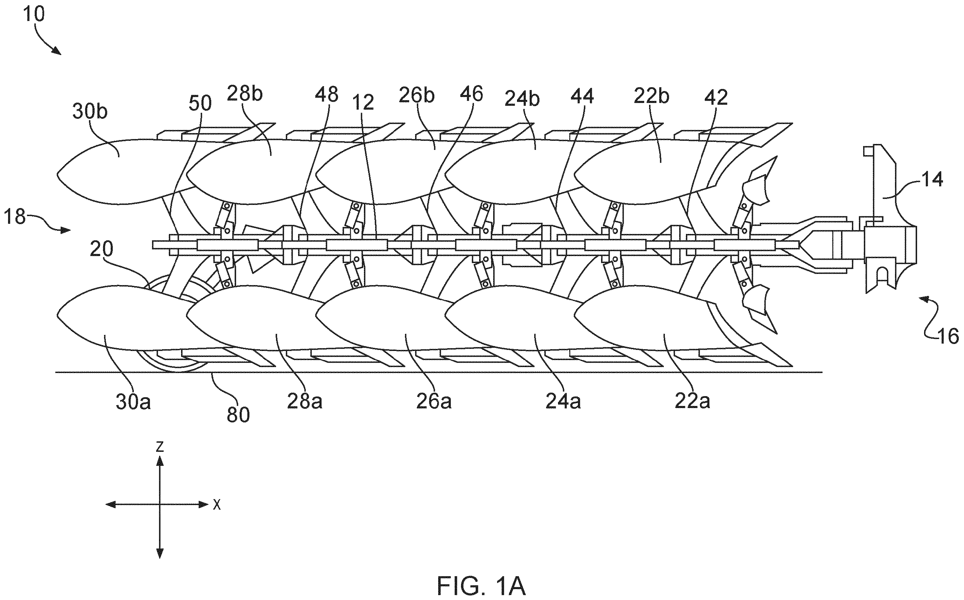

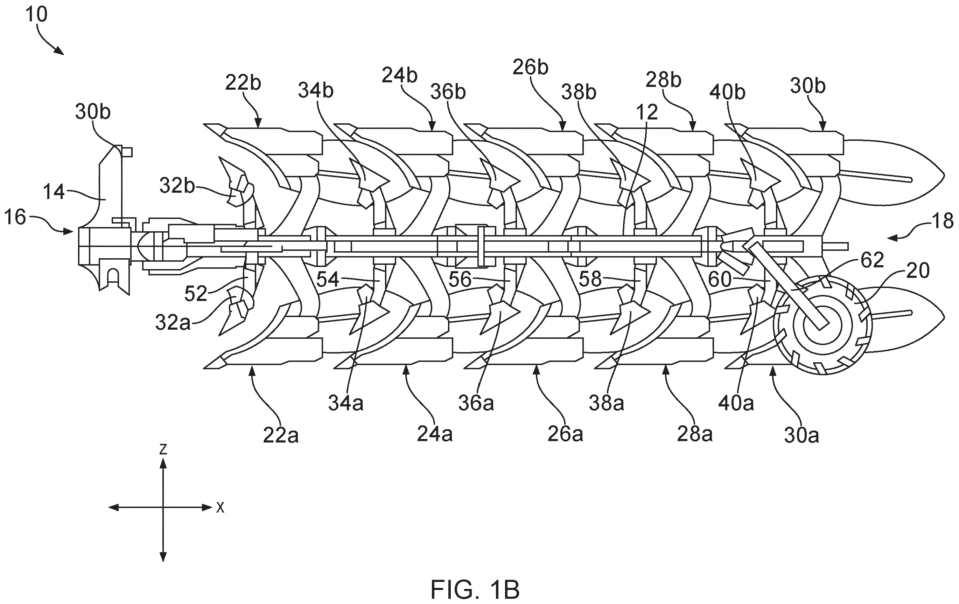

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 may be a rectangular or round tube extending between a headstock 14 at a front end 16 of the plough towards a depth wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a tractor. It follows that each run of the illustrated plough 10 through a field creates five adjacent furrows.

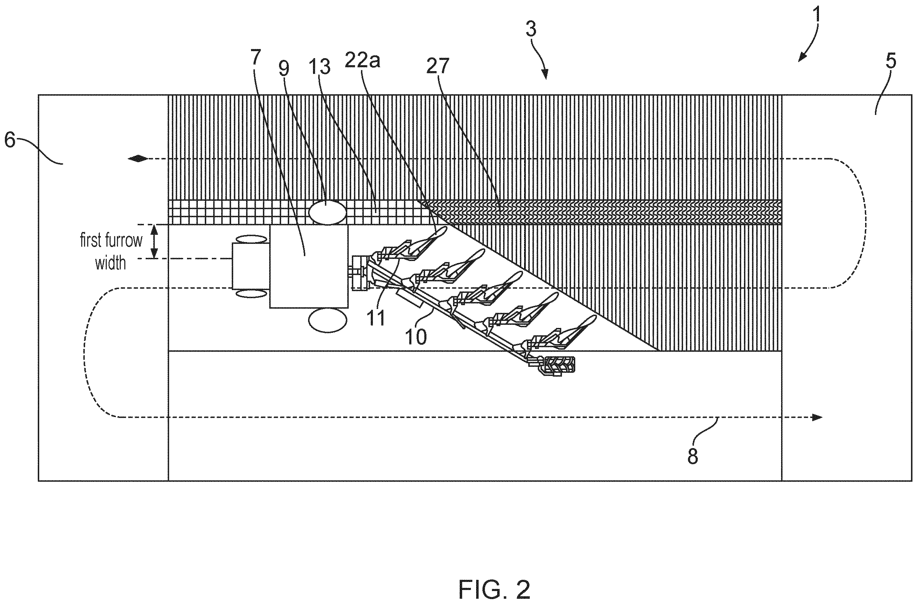

Turning to Figure 2, a typical operation of an agricultural machinery comprising a tractor 7 and a plough 10 is described. In use, the plough 10 is drawn as an attachment (implement) behind an agricultural towing vehicle (e.g. tractor 7). It will be appreciated that it is equivalently feasible to locate the plough 10 in front of or both in front of and behind the tractor 7.

Figure 2 shows a schematic work area 1, e.g. a crop field, which is divided into a main field 3 and headlands 5, 6. It will be appreciated that some of the relative dimensions that are shown in Figure 2 have been exaggerated to illustrate the key features of this drawing that are relevant to the present disclosure. A tractor 7 draws the plough 10 across the main field 3 in generally parallel working rows. The working rows are part of the trajectory 8 of the tractor 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

In Figure 2, the tractor 7 is shown ploughing "in the furrow". That is, the tractor 7 is driven such that at least a back wheel 9 of the tractor 7 is located in the unfilled last furrow 13 of the previous (and therefore neighbouring) working row. This unfilled last furrow 13 of the previous working row will be filled by the first plough body 22a turning over soil when ploughing the first furrow of the current working row. The portion of the last furrow of the previous working row that has already been filled by the first plough body during the current working row is labelled with reference 27 in Figure 2. The width of the first furrow is marked on Figure 2.

At the end of each run/working row, the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5, 6 and the main field 3, the plough 10 is transferred to a headland/transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movement on the headlands, the plough 10 is also reversed. That is, the main frame 12 is rotated by 180 degrees with respect to the headstock 14 to move the plough from a first configuration to a second configuration. In its first configuration shown in Figures 1A to 1C, the plough 10 is set up such that plough bodies 22a, 24a, 26a, 28a, and 30a of each of the pairs are in contact with the soil. This first configuration is shown in Figure 2 and sometimes referred to as the "right turning configuration", since the mouldboards of the plough bodies 22a, 24a, 26a, 28a and 30a are arranged to move the soil sideways from left to right when viewed in the direction of travel. In its second configuration (not illustrated), the plough 10 is set up such that plough bodies 22b, 24b, 26b, 28b, and 30b of each of the pairs are in contact with the soil. This second configuration is achieved after rotating the main frame by 180 degrees, such that the majority of plough bodies are arranged to the right of the tractor (not shown). It follows that the second configuration is also referred to as the "left turning configuration".

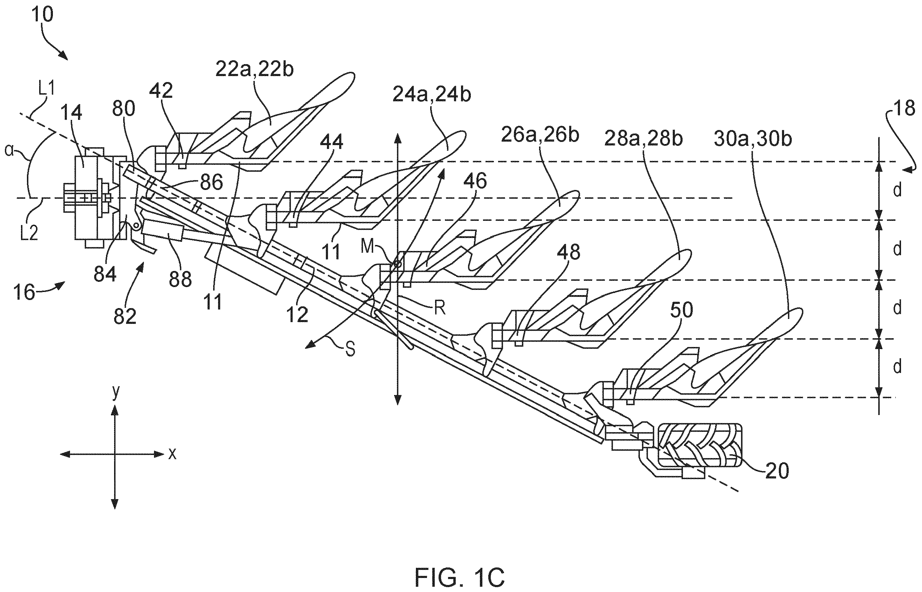

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C. In particular, the furrow width can be defined as the distance between the landsides 11 of adjacent plough bodies. The landside 11 is the part of the plough body that slides along the face of the furrow wall on the opposite side to the mouldboard. As will be discussed below, the first furrow width is a different parameter of the plough. The first furrow width relates to the furrow that is created by the first plough body. In contrast to the furrow width of the other plough bodies, it cannot be defined as the distance between the landsides 11 of adjacent plough bodies because there is no plough body in front of the first plough body. Therefore, the first furrow width is defined as the lateral distance between: the landside 11 of the first (front-most) plough body 22a; and ii) the boundary between the uncut field and the edge of the last furrow 13 of the adjacent working row.

As the reversible plough 10 reaches the end of the first run, the main frame 12 is rotated by 180 degrees (reversed) with respect to the headstock 14. A turning cylinder (not shown), attached to the headstock 14 may be used to rotate (reverse) the plough 10. During rotation of the main frame, the first plurality of plough bodies, e.g. 22a, 24a, 26a, 28a, 30a, are transferred to the top of the plough 10. At the same time, the second plurality of plough bodies e.g. 22b, 24b, 26b, 28b, 30b, which were not in use in the previous run, is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.
Reversing the plough 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In both configurations of the plough 10 the main frame 12 is supported by a depth wheel 20. The depth wheel 20 is arranged at the back end 18 of the plough 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes depth wheel 20, which acts as a depth wheel to adjust the ground clearance of the main frame 12. A linkage provided between the depth wheel 20 and the main frame 12 allows the operator to lift or lower the main frame 12 with respect to a ground surface 80. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by adjusting the link between the depth wheel 20 and the main frame 12, then the working depth of the plurality of first ground engaging tools shown in Figures 1A to 1C is increased, i.e. the plurality of first ground engaging tools are lowered further into the soil. If, on the other hand, the main frame 12 is lifted, then the working depth of the plurality of first ground engaging tools is decreased, i.e. the plurality of first ground engagement tools are pulled out of the soil.

Referring back to Figure 1C, it will be appreciated that the distance d between the plough bodies 22a/22b, 24a/24b, 26a/26b, 28a/28b, and 30a/30b is adjustable. In the embodiment of the plough implement 10 shown in Figures 1A to 1C, the lateral distance d is adjustable by pivoting the main frame 12 in a horizontal plane, such as in the plane shown in Figure 1C. In other words, the main frame 12 is connected to the headstock 14 via a pivot 80. The main frame 12 may rotate about the pivot 80 with respect to the headstock 14 and thus also with respect to an agricultural work vehicle (not shown) that is connected to the headstock 14.

In a normal operation, a longitudinal axis L1 of the main frame 12 is arranged at an angle α with respect to a longitudinal axis L2 of a corresponding agricultural work vehicle. The longitudinal axis L2 of the agricultural work vehicle is parallel to its direction of travel and therefore represents a direction in which the work vehicle drags or pushes the plough 10. It will be appreciated that the angle α between the longitudinal axis L1 of the main frame 12 and the longitudinal axis L2 of the agricultural work vehicle may be changed by pivoting the main frame about the pivot 80. A plough width adjustment mechanism 82 comprises the pivot 80, link plate 84, a front part 86 of the main frame 12 and a width adjustment actuator 88. The width adjustment actuator 88 in this embodiment is a hydraulic cylinder. By retracting the width adjustment actuator 88, the front part 86 of the main frame 12 will be drawn closer towards the link plate 84, thereby increasing the angle α between the longitudinal axis L1 of the main frame 12 and the longitudinal axis L2 of the agricultural work vehicle. As the angle α between the longitudinal axes L1, L2 is increased, so is the lateral distance d between the neighbouring plough bodies 22a to 30b. Similarly, if the actuator 88 is extended, the main frame 12 is pivoted counter-clockwise in Figure 1C about the pivot 80, thereby decreasing the angle α between the longitudinal axis L1 of the main frame 12 and the longitudinal axis L2 of the agricultural work vehicle. As the angle α between the longitudinal axis L1 and L2 is decreased, the lateral distance d between the neighbouring plough bodies 22a through to 30b decreases.

Although this is not specifically represented in Figure 1C, it will also be appreciated that as the angle α between the axes L1, L2 is increased, a lateral arrangement of the main frame and the plough bodies 22a to 30b with respect to the agricultural work vehicle (not shown) changes. This is because, as the angle α is manipulated, the centre M of the plough implement is moved along circular segment S. Accordingly, as the angle α is increased, the centre M of the plough implement 10 is moved towards the bottom of Figure 1C. Similarly, if the angle α is decreased, the centre M of the plough implement 10 moves towards the top of Figure 1C.

A lateral adjustment of the plough bodies with respect to the agricultural work vehicle may also be possible without changing the angle α between the main frame 12 and the agricultural work vehicle. As will be discussed below, the plough implement can also include a lateral frame adjustment mechanism, which may be implemented as a sliding mechanism that allows for lateral movement of the main frame 12 with respect to the headstock 14 and, therefore, with respect to the agricultural work vehicle. Lateral movement of the main frame 12 in this way sets the width of the first furrow.

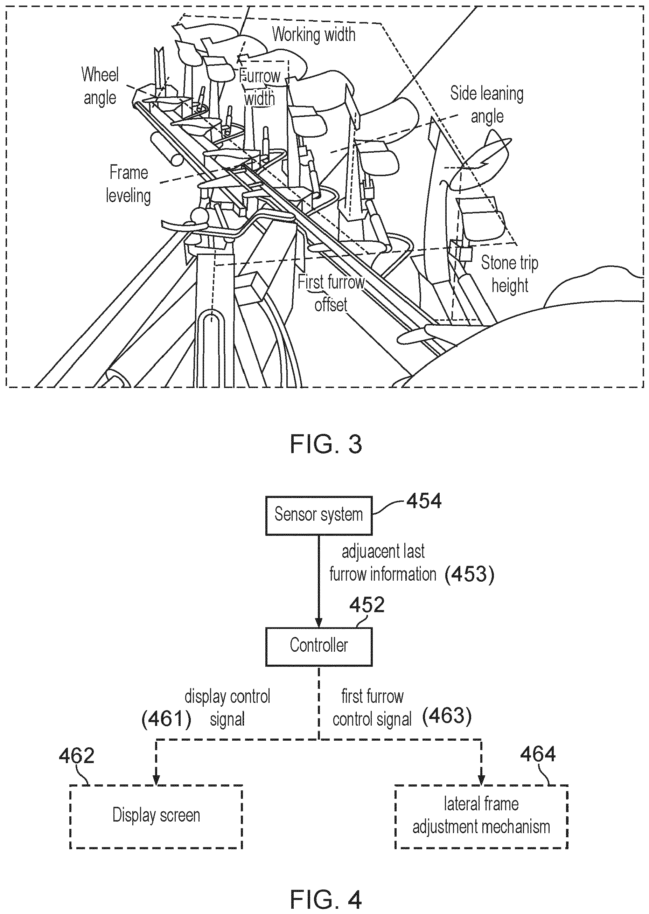

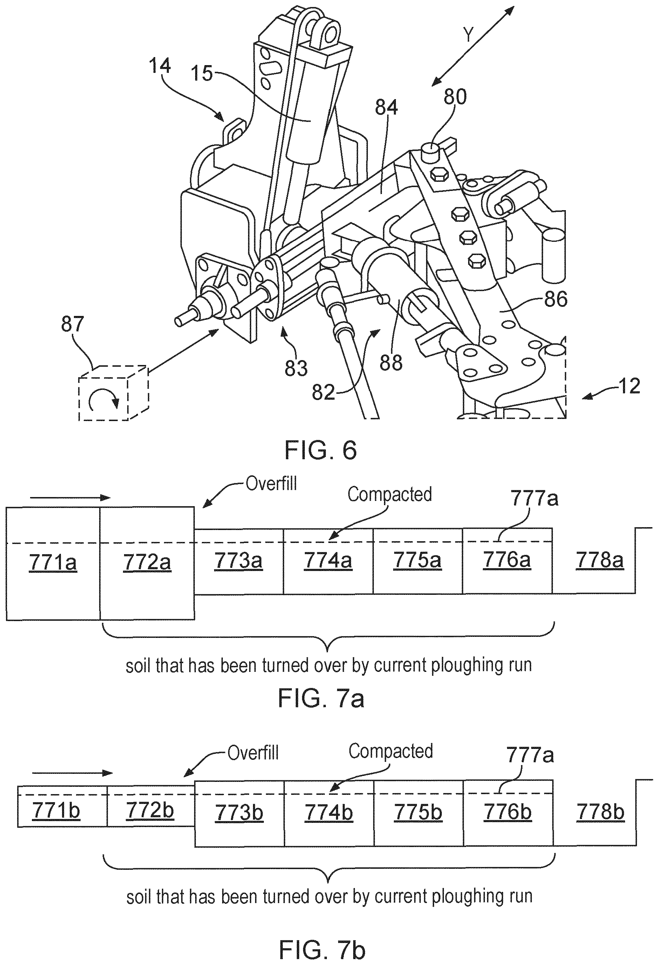

Figure 3 shows an example image of a plough while it is working in the field. Various operating characteristics of the plough are labelled to assist with the subsequent description in this document. The following operating characteristics are particularly relevant to the present disclosure:
- A first furrow width, which is labelled in Figure 2 but not shown in Figure 3. The width of the first furrow represents the lateral distance between: the landside of the first (front-most) plough body; and ii) the boundary between the already ploughed part of the field and the uncut field that is to be ploughed by the first plough body. The lateral frame adjustment mechanism that is described below with reference to Figure 6 is one example of an actuator that can set the first furrow width of the plough.
- A furrow width, as shown in Figure 3. The furrow width represents the lateral distance between two adjacent plough bodies. The furrow width can be determined as the lateral distance between the landsides of two adjacent plough bodies. The plough width adjustment mechanism that is described below with reference to Figure 6 is one example of an actuator that can set the furrow width of the plough.
- A working width of the plough, as shown in Figure 3. The working width represents the lateral distance between the plough bodies at the respective opposite ends of the main frame. As illustrated in Figure 3, the working width can be determined as the distance between: i) the landside of the last plough body; and ii) the outermost point of the first furrow width (that is created by the first plough body). The plough width adjustment mechanism that is described below with reference to Figure 6 is also an example of an actuator that can set the working width of the plough.
- A first furrow offset (as shown in Figure 3). The first furrow offset represents the lateral distance between the first (front-most) plough body and the headstock (such as a laterally centrally point of the headstock). The lateral frame adjustment mechanism that is described below with reference to Figure 6 is also an example of an actuator that can set the first furrow offset of the plough.

It is known for a farmer to plough a field in the autumn and then drill in the spring. Problems can occur with an uneven field in the spring due to the fact that the first furrow can be wider than the rest of the furrows. When ploughing in the furrow (as shown in Figure 2), the tractor wheel can compact and enlarge the last furrow of the earlier working runs (that is, the furrow that is to be filled by turning over soil when creating the first furrow of the current working run). For instance, a 550-700mm wide tyre can be driven along a 400-550mm wide last furrow from the earlier working run. Therefore, soil turned over when the first plough body creates the first furrow of the current working run needs to fill a greater volume than the second and subsequent plough bodies that create the subsequent furrows. These subsequent furrows can have a well-defined furrow to fill.

If the last furrow of the earlier working run has been filled such that it is at the same level as the other furrows after ploughing in the autumn, then it will probably be a valley in the spring. This is because the bigger volume of soil that was used to fill the last furrow will shrink and compact more than the smaller furrows. It has been found that in order for all of the furrows to appear to be evenly filled in the spring, when ploughing "in the furrow" the last furrow of the earlier working run should be overfilled in the autumn.

It is also possible that the furrow width (i.e., the lateral distance between two adjacent plough bodies) and / or furrow depth can be changed between consecutive working runs. This is irrespective of whether the farmer is ploughing "in the furrow" (such that a wheel of the tractor is located in the unfilled last furrow of the previous working run) or is ploughing "on land" (such that all wheels of the tractor are located on the unploughed field, and not in the unfilled last furrow of the previous working run). Either way, the last furrow of the earlier working run that is to be filled by the first plough body during the current working run has a different width and / or depth to the furrows that are to be filled by the second to the last plough bodies during the current working run. In such scenarios, it is still desirable for all of the furrows to be evenly filled at a later time when a subsequent agricultural operation is to be performed. As will be described in detail below, this can be achieved by overfilling or underfilling the last furrow of the earlier ploughing run.

Figure 4 illustrates an example embodiment of a controller 452 for a plough that is being propelled by a tractor. Some or all of the functionality of the controller 452 can be provided by a processor that is co-located with the plough, a processor that is co-located with a tractor that is connected to the plough to provide propulsion to the plough and / or a processor that is provided remotely from the plough and the tractor. As will be discussed in detail below, the controller 452 can assist with overfilling or underfilling the last furrow of the earlier ploughing run such that the field is better prepared for a subsequent agricultural operation (such as seed drilling in the spring, when the field has been ploughed in the autumn).

The controller 452 receives adjacent last furrow information 453, which in this example represents the width of the last furrow of an earlier ploughing run that is adjacent to the furrows being created as part of a current ploughing run. This example relates to an "in the furrow" ploughing operation, for which a wheel of the tractor is expected to have compressed and / or enlarged the last furrow of an earlier ploughing run, as shown in Figure 2. The adjacent last furrow information 453 in this example represents a portion of the last furrow that is in between the tractor and the plough. In this way, the adjacent last furrow information 453 represents a portion of the last furrow that is behind the tractor, but before it is filled by ploughing a first furrow of a current ploughing run. Therefore, the adjacent last furrow information 453 represents the width of the last furrow of the earlier working run after a wheel of the tractor has driven through it (and potentially enlarged it).

In this example, the adjacent last furrow information 453 is provided by a sensor system 454 that has a field of view of the ground that is between the tractor and the plough. For instance, the sensor system 454 may be mounted on the tractor such that it is facing backwards and downwards towards the ground that is in front of the plough. Alternatively, the sensor system 454 may be mounted on the plough such that it is facing forwards and downwards towards the ground that is behind the rear tractor wheels. In some examples, the sensor system 454 may be provided as a left sensor and a right sensor. In this way, one of the sensors is well positioned for capturing images of the last furrow of the earlier working row when the plough is in the "left turning configuration", and the other of the sensors is well positioned for capturing images of the last furrow of the earlier working row when the plough is in the "right turning configuration".

The sensor system 454 in this example is an imaging sensor, which may be provided as one or more of a camera, a radar sensor and a lidar sensor. Each of these sensors can be appropriately mounted on the tractor and / or the plough such that they acquire images of the last furrow of the earlier ploughing run in such a way that (at least) the width of the last furrow of the earlier, adjacent, ploughing run can be determined. For instance, the sensing system 454 may also include a processor that can process the acquired images in order to determine the adjacent last furrow information. Such processing can include edge detection techniques or any other suitable algorithms that are known in the art.

The controller 452 can process the received adjacent last furrow information 453 to determine a first furrow width setting for the plough. The controller gives the first furrow width setting a value such that operation of the plough with that setting will result in the last furrow of the earlier ploughing run (that is adjacent to the furrows being created as part of the current ploughing run) being overfilled. In this way, the level of the soil that is placed into the last furrow of the earlier working run by the first plough body is higher than the level of the soil that is turned over into furrows by the other plough bodies (i.e., by the second to the last plough bodies). As discussed above, overfilling the last furrow in this way in autumn results in a more flat field in the spring such that a subsequent agricultural operation (such as drilling) can be performed more effectively. Overfilling the last furrow in this way therefore provides an improvement in the subsequent agricultural operation. Various examples of how the controller can determine the first furrow width setting such that operation of the plough with that setting results in overfilling are described below.

In one example, the controller 452 can compare the received width of the last furrow of the earlier working run (as represented by the adjacent last furrow information 453), with a furrow width setting of the plough. (As indicated above, the furrow width setting is the lateral distance between two adjacent plough bodies.) The controller 452 can process this information to determine the ratio between these values, and can then apply that ratio to the received width of the last furrow to determine an initial value for the first furrow width setting that would be expected to result in the filled last furrow having the same height as the other furrows. Then, in order to overfill the last furrow, the controller 452 can apply a scaling factor (that is greater than 1) to the initial value for the first furrow width setting to calculate the first furrow width setting that will result in the desired overfilling. The value of the scaling factor that is used will determine by how much the last furrow of the earlier working run is overfilled. It will be appreciated that if the last furrow were to be underfilled, then a scaling factor of less than 1 can be used.

In this way, the controller 452 receives a furrow width setting for the plough for the current working run. The controller 452 can then determine the first furrow width setting for the plough also based on the furrow width setting.

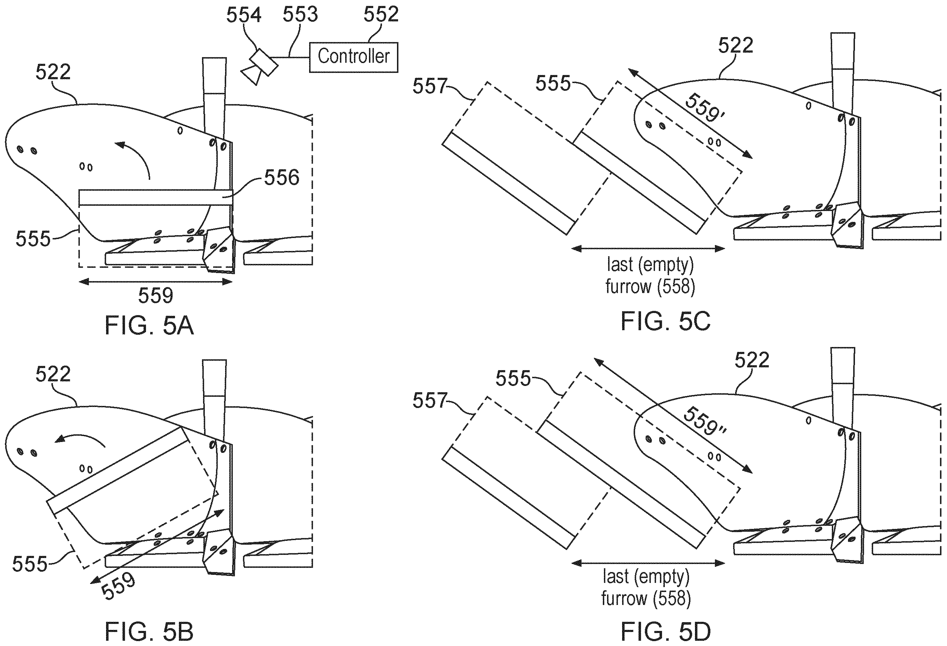

Figures 5A to 5D illustrate schematically how a first furrow width setting of a plough according to an embodiment of the present disclosure can overfill the last furrow of an earlier ploughing run.

Shown in each of Figures 5A to 5D is a first plough body 522 as it turns over a layer of soil 555 into an empty last furrow from an adjacent working run. Figure 5A shows schematically a sensor system 554 that provides adjacent last furrow information 553 (as discussed in detail above) to a controller 552. The sensor system 554 and the controller 552 are omitted from Figures 5B to 5D for ease of illustration.

Figure 5A shows schematically the layer of soil 555 that is just about to come into contact with the first plough body 522 as the first plough body 522 is moving through the agricultural field.

Figure 5B shows the same layer of soil 555 at a later point in time, at which time it is partway through being turned over by the first plough body 522. The layer of soil 555 has been identified such that it has a thickness that corresponds to the working depth of the first plough body 522. The width of the layer of the soil 555 corresponds to the first furrow width setting of the plough, as labelled with reference number 559 in Figure 5B. A top portion of the layer of the soil 555 is shown with a dotted fill to schematically represent plant residue 556, such as weeds or a remainder of crop that lies in the field after it has been harvested. As discussed herein, one of the purposes of ploughing can be to bury residue 556 to prepare the field for a subsequent agricultural operation such as harrowing or seeding.

In Figure 5C, the layer of soil 555 has been completely turned over by the first plough body 522 such that it is resting upon another layer of soil 557. This other layer of soil 557 was created by the last plough body of the immediately preceding working run, such that the turning over of this other layer of soil 557 leaves behind the last (empty) furrow from the preceding working run that it is to be filled by the first plough body of the current working run. This last (empty) furrow is labelled in Figure 5C with reference number 558. It is this last (empty) furrow 558 that is represented by the adjacent last furrow information 553 that is provided to the controller 552.

In Figure 5C, the first furrow width of the layer of soil 555 that is turned over by the first plough body 522 is labelled with reference 559'. It can be seen from Figure 5C that the width of the layer of soil 555 that is turned over by the first plough body 522 is about the same as the width of the other layer of soil 557 that was turned over by the last plough body from the preceding working run.

Figure 5D shows a situation that is similar to that of Figure 5C, but this time the first furrow width setting for the current ploughing operation is larger than it is for Figure 5C. Therefore, the width of the layer of soil 555 that has been turned over by the first plough body 522 (labelled with reference 559") is larger than the width of the other layer of soil 557 that was turned over by the last plough body from the preceding working run. Therefore, using the first furrow width setting that is represented by Figure 5D can be considered as overfilling the last furrow 558 of the earlier ploughing run.

Figure 6 shows the headstock 14 of a plough along with parts of a plough width adjustment mechanism 82 and the lateral frame adjustment mechanism 83 in greater detail. The plough width adjustment mechanism 82 and the lateral frame adjustment mechanism 83 are both examples of a lateral adjustment mechanism that can move the main frame 12 and thus the ground engaging tools with respect to the headstock 14 in a lateral direction Y. The plough width adjustment mechanism 82 rotates the main frame 12 about the pivot 80, and since the ground engaging tools are fixed to the main frame 12 this results in the ground engaging tools being moved along a path that has a lateral component. The lateral frame adjustment mechanism 83 laterally moves the main frame 12 with respect to the headstock 14, and since the ground engaging tools are fixed to the main frame 12 this also results in the ground engaging tools being moved laterally. In this way, the lateral frame adjustment mechanism 83 can laterally translate the entire main frame 12 with respect to the headstock 14 and therefore set the first furrow width of the plough.

The lateral frame adjustment mechanism 83 is illustrated partly in an exploded view, with a motor 87 shown separated from the rest of the plough implement in order to more clearly illustrate the functionality of the mechanism. The motor may be an electric motor, a hydraulic motor or any other type of motor that can provide a suitable rotational force. In this example, the lateral frame adjustment mechanism 83 includes a lead screw mechanism that is adjusted by the motor 87. In this way, the lead screw mechanism translates the rotational force provided by the motor 87 to a linear force for laterally moving the main frame 12 with respect to the headstock 14. It will be appreciated that the lead screw mechanism shown in Figure 6 can be replaced with any linear actuator that can provide the lateral adjustment of the plough bodies with respect to the agricultural work vehicle.

Figure 6 also shows the turning cylinder 15, which is used to rotate (reverse) the main frame 12.

From the above description, it will be understood that the lateral arrangement of the plough implement 10 with respect to the agricultural vehicle may be changed in a variety of ways, two of which have been set out above. It should also be noted that a lateral adjustment of the plough 10 with respect to the agricultural work vehicle 7 does not require a lateral movement of every part of the plough implement 10 in a lateral direction. Rather, a lateral adjustment of the plough implement may be achieved by simply changing the lateral position of one or more ground engaging tools, such as the plough bodies, of the plough implement.

Returning to Figure 4, in some examples the adjacent last furrow information 453 can also or alternatively represent the depth of the last furrow of the earlier ploughing run. This depth information can be obtained by processing images that are acquired by the sensor system 454. Implementations where the sensor system 454 includes a radar sensor or a lidar sensor can be particularly well-suited to such functionality. If the adjacent last furrow information 453 represents both the width and the depth of the last furrow of the earlier ploughing run, then the controller 452 can calculate the cross-sectional area of the last furrow of the earlier ploughing run based on the width and the depth of the last furrow.

The controller 452 can also receive a depth setting (not shown) of the plough for the current ploughing run. In some examples the value of the depth setting may already be available to the controller 452, for example if the controller 452 is used to adjust the working depth of the plough. The controller 452 can then determine the first furrow width setting for the plough based on the depth setting and the calculated cross-sectional area of the last furrow of the earlier ploughing run, in order to overfill the last furrow of the earlier ploughing run. In a similar way to that described above, the controller 452 can determine the first furrow width setting such that, when it is multiplied by the depth setting, it corresponds to a cross-sectional area of a layer of soil that is turned over by the first plough body during the current ploughing run that is greater than the cross-sectional area of the last furrow of the earlier ploughing run. In doing so, the controller 452 can apply a scaling factor to the cross-sectional area of the last furrow of the earlier ploughing run to determine a target cross-sectional area of the layer of soil that is turned over by the first plough body during the current ploughing run. The scaling factor can be greater than 1. For example, any of the scaling factors disclosed herein can take a value of 1.1, 1.2, 1.3 or any other suitable number. In this way, the controller 452 can determine the first furrow width setting for the plough such that a first plough body of the plough turns over more soil than the calculated cross-sectional area of the last furrow of the earlier ploughing run.

The controller 452 can determine a display control signal 461 and / or a first furrow control signal 463 based on the determined first furrow width setting. The controller 452 can determine the display control signal 461, and then provide the display control signal 461 to a display screen 462 such that the determined first furrow width setting is presented to an operator of the tractor. For instance, the display screen 462 may be in the cab of the tractor such that the operator can manually control the operation of the tractor and / or the plough such that the determined first furrow width setting is achieved. The controller 452 can determine the first furrow control signal 463, and then provide the first furrow control signal 463 to a lateral frame adjustment mechanism 464 (such as any of the ones described herein) of the plough in order to automatically set the first furrow width setting for the plough.

Figures 7a and 7b illustrate schematic cross-sectional views through six furrows that have been filled with soil, and a neighbouring empty furrow. Figure 7a will be used to describe an example where the furrow depth is shallower for the current ploughing run than it was for the immediately previous ploughing run. Figure 7b will be used to describe an example where the furrow depth is deeper for the current ploughing run than it was for the immediately previous ploughing run.

In Figure 7a, the five right-most filled furrows 772a-776a that are shown represent soil that has been turned over by five plough bodies during a current ploughing run. The right-most empty furrow 778a is the last furrow that is ploughed by the last plough body during the current ploughing run, which is left empty because it will be filled by the first plough body during the next ploughing run. The left-most filled furrow 771a is filled by the last plough body during the immediately preceding ploughing run. As can be seen from Figure 7a, the working depth of the plough is shallower for the current ploughing run than it was for the immediately preceding ploughing run.

Also shown in Figure 7a, as a dashed line 777a, is the expected level of the soil at a later point in time, for example at a time when the next agricultural operation is expected to be performed in the field. As can be seen in the drawing, the expected level of the soil 777a is expected to be lower than it is immediately after the field is ploughed due to soil compaction that will occur over time. If, during the current ploughing run, the soil turned over by each of the five plough bodies resulted in all five furrows 772a-776a being filled to the same level or filled with the same amount of soil, then after compaction, the top surface of the last furrow of the preceding ploughing run 772a (that is filled by the first plough body during the current ploughing run) would be lower than the other furrows. This is because soil in a furrow with a larger cross-section will compact more than soil in a furrow with a smaller cross-section. Therefore, as shown in Figure 7a, the plough has been controlled such that a first furrow width setting for the plough is determined that causes the last furrow of the earlier ploughing run 772a to be overfilled when compared with the other furrows that are filled by the second to the last plough bodies 773a-7776a (as defined by the furrow width setting of the plough) during the current ploughing run. In the same way that is discussed above, a controller can determine such a first furrow width setting based on received adjacent last furrow information (which in this example represents at least the depth of the last furrow of the earlier ploughing run).

In Figure 7b, the same furrows that are shown in Figure 7a are illustrated but this time they are identified in the drawing with reference numbers with a 'b' suffix. For Figure 7b, the working depth of the plough is deeper for the current ploughing run than it was for the immediately preceding ploughing run. In order for the expected level of the spoil 777b after compaction to be flat, the plough has been controlled such that a first furrow width setting for the plough is determined that causes the last furrow of the earlier ploughing run 772b to be underfilled when compared with the other furrows that are filled by the second to the last plough bodies 773b-776b (as defined by the furrow width setting of the plough) during the current ploughing run. In the same way that is discussed above, a controller can determine such a first furrow width setting based on received adjacent last furrow information.

For the operation that is illustrated by Figures 7a and 7b, the tractor does not necessarily have to be ploughing "in the furrow". Therefore, the adjacent last furrow information can represent a portion of the last furrow before it is filled by ploughing a first furrow of a current ploughing run, but is not necessarily behind the tractor. That is, a sensor can be used that measures the width and / or depth of the last furrow of the earlier ploughing run in front of the tractor during the current ploughing run, or a sensor that can be used that acquires the adjacent last furrow information during the preceding ploughing run.

It will be appreciated that the functionality that is represented by Figures 7a and 7b for a change in depth between adjacent ploughing runs can be similarly applied for a change in furrow width between adjacent ploughing runs. This is because the change in furrow width will also cause a change in the cross-sectional area that is to be filled by the first plough body of the current ploughing run.

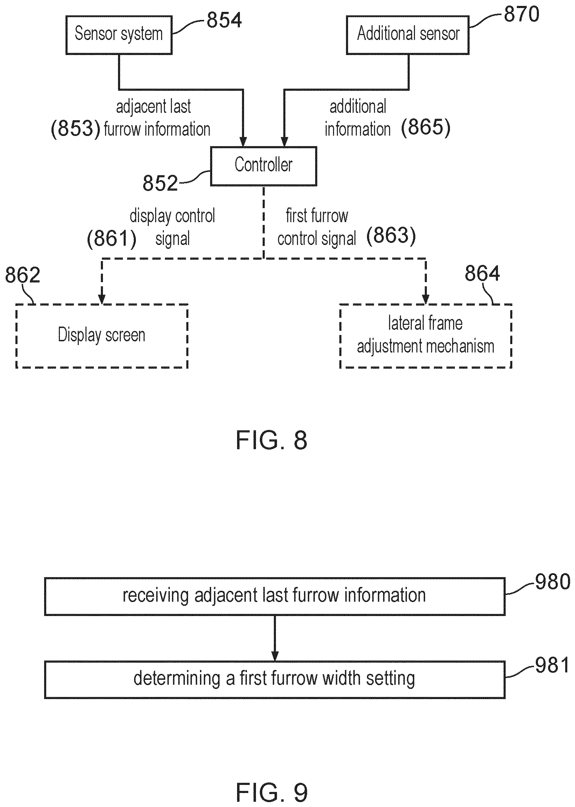

Figure 8 illustrates another example embodiment of a controller 852 for a plough according to an embodiment of the present disclosure. As will be discussed below, the controller 852 of Figure 8 receives additional information 865 such that the first furrow width setting can be more accurately set. The additional information 865 can represent a variety of different environmental parameters, as will be discussed below. Depending upon the type of additional information 865, it may or may not be provided by an additional sensor 870.

In one example, the additional information 865 includes soil type information, which represents a type of soil that is being ploughed during the current ploughing run. The soil type information may be provided by a soil type sensor, or it may be provided by an operator engaging with a user interface. The controller 852 can then determine the first furrow width setting for the plough also based on the received soil type information. Using soil type can be beneficial because different soil types can be known to compact by different amounts. Therefore, the controller 852 can beneficially take the soil type into account when calculating by how much the last furrow of the earlier ploughing run should be overfilled or underfilled. That, is, the controller 852 can calculate the volume or cross-sectional areal of soil that is required to appropriately overfill or underfill the last furrow of the earlier ploughing run based on the adjacent last furrow information 853 and the soil type. The soil type can be used to set a scaling factor (such as the ones discussed above) that is used to determine how much to overfill or underfill the last furrow of the earlier ploughing run such that the field is expected to be flat for a subsequent agricultural operation, which may be many months later. In one implementation, a specific scaling factor can be stored in memory associated with each of the different soil types. The controller 852 can then retrieve the appropriate one of the scaling factors from memory based on the received soil type information, and apply that retrieved scaling factor when determining the first furrow width setting.

In one example, the additional information 865 includes humidity information, which represents the humidity of the air in the vicinity of the plough during the current ploughing run. Such humidity information can be provided by a humidity sensor, or it can be obtained from a website or any other source of information that provides suitable humidity information. The controller 852 can then determine the first furrow width setting for the plough also based on the received humidity information. The humidity of air during the ploughing operation can affect the amount that the soil will compact over time after the ploughing operation. This example can advantageously enable the controller 852 to take the humidity, and therefore the likely amount of compaction due to variations in humidity, into account when determining how much to overfill or underfill the last furrow of the earlier ploughing run. As with other examples described herein, determining how much to overfill or underfill the last furrow can be implemented through use of a scaling factor.

In one example, the additional information 865 includes compaction information, which represents a compaction of soil that is being ploughed during the current ploughing run. For instance, the compaction information can represent the compaction of soil in a portion of the last furrow of the earlier ploughing run that is behind the tractor but before it is filled by ploughing the first furrow of the current ploughing run. In one example, the controller 852 can determine the compaction information based on soil type information and humidity information. In another example, a soil radar can provide the compaction information. In another example, the compaction information can be determined by taking a sample of the soil. The controller 852 can then determine the first furrow width setting for the plough also based on the received compaction information. In a similar way to the described above, the controller 852 can determine an appropriate scaling factor for determining how much to overfill or underfill the last furrow of the earlier ploughing run based on the received compaction factor. This may be implemented by using a database / look-up table that is stored in memory, or by applying an equation to one or more of the different types of additional information 865 that are described herein.

In one example, the additional information 865 includes receive residue information, which represents the amount and / or type of residue in soil that is being ploughed during the current ploughing run. The amount and / or type of residue can affect the degree with which the soli in a ploughed furrow will compact over time, potentially including the speed with which the soil will compact. The controller 852 can then determine the first furrow width setting for the plough also based on the received residue information in order to further improve uniformity of the field at an appropriate point in time in the future when a subsequent agricultural operation is to be performed. A residue sensor can be used to provide the residue information. Such a residue sensor can be implemented as a camera (in some examples a thermal camera) along with a processor to perform image processing on captured images. Alternatively, the residue information can be provide by an operator engaging with a user interface.

When any of the controllers disclosed herein are provided in association with a plough, they can be considered as part of a plough system. Such a plough system includes at least the plough and the controller. It can also include any of the sensors that are disclosed herein, and also any user interfaces that are used by an operator to provide information to the controller that is used to determine the first furrow width setting.

Figure 9 shows a computer implemented method of operating a plough that is being propelled by a tractor according to the present disclosure. The computer implemented method can, for example, be performed by any controller processor disclosed herein.

At step 980, the method involves receiving adjacent last furrow information. as discussed above, the last furrow information represents at least the width of the last furrow of an earlier ploughing run that is adjacent to the furrows being created as part of a current ploughing run. In one example, the adjacent last furrow information represents the last furrow behind the tractor before it is filled by ploughing a first furrow of a current ploughing run.

At steps 981, the method involves determining a first furrow width setting for the plough based on the received adjacent last furrow information in order to overfill or underfill the last furrow of the earlier ploughing run that is adjacent to the furrows being created as part of the current ploughing run. Again, this functionality is discussed in detail above.

The functionality of any of the examples disclosed herein can be supplemented with feedback that can also be used by the controller to determine the first furrow width setting. For example, a camera or any other sensor can provide filled-last-furrow-information that represents a height profile of the last furrow of the earlier ploughing run after it has been filled by the current ploughing run. This is the portion of the last furrow of the previous working row that is labelled with reference 27 in Figure 2. The controller can then compare the filled-last-furrow-information with an expected height profile of the last furrow after it has been overfilled or underfilled, such that it can then adjust the first furrow width setting for the plough based on the result of the comparison. In this way, the degree of overfill or underfill can be measured and the first furrow width setting of the plough can be adjusted such that it tends towards a desired value, thereby reducing the difference between the filled-last-furrow-information and the expected height profile of the last furrow after it has been overfilled or underfilled.

## Claims

1. A controller for a plough that is being propelled by a tractor, wherein the controller is configured to:
receive adjacent last furrow information, which represents the width and / or depth of the last furrow of an earlier ploughing run that is adjacent to the furrows being created as part of a current ploughing run; and
determine a first furrow width setting for the plough based on the received adjacent last furrow information in order to overfill or underfill the last furrow of the earlier ploughing run that is adjacent to the furrows being created as part of the current ploughing run.

2. The controller of claim, wherein the controller is configured to apply a scaling factor when determining the first furrow width setting to set by how much the last furrow of the earlier ploughing run is overfilled or underfilled.

3. The controller of claim 1 or claim 2, wherein the adjacent last furrow information represents the width of the last furrow behind the tractor after a wheel of the tractor has driven through it as part of the current ploughing run, but before it is filled by ploughing a first furrow of a current ploughing run.

4. The controller of any preceding claim, wherein the controller is further configured to:
receive a furrow width setting for the plough for the current working run; and
determine the first furrow width setting for the plough also based on the furrow width setting.

5. The controller of any preceding claim, wherein the adjacent last furrow information represents the width and the depth of the last furrow of the earlier ploughing run.

6. The controller of any preceding claim, wherein the controller is configured to:
receive a depth setting of the plough for the current ploughing run;
calculate the cross-sectional area of the last furrow of the earlier ploughing run based on: the width and the depth of the last furrow of the earlier ploughing run; and
determine the first furrow width setting for the plough based on the depth setting and the calculated cross-sectional area of the last furrow of the earlier ploughing run, such that a first plough body of the plough turns over more or less soil than the calculated cross-sectional area of the last furrow of the earlier ploughing run.

7. The controller of any preceding claim, wherein the controller is further configured to:
determine a display control signal based on the determined first furrow width setting; and
provide the display control signal to a display screen such that the determined first furrow width setting is presented to an operator of the tractor.

8. The controller of any preceding claim, wherein the controller is further configured to:
determine a first furrow control signal based on the determined first furrow width setting; and
provide the first furrow control signal to a lateral frame adjustment mechanism of the plough in order to automatically set the first furrow width setting for the plough.

9. The controller of any preceding claim, wherein the controller is configured to:
receive soil type information, which represents a type of soil that is being ploughed during the current ploughing run; and
determine the first furrow width setting for the plough also based on the received soil type information.

10. The controller of any preceding claim, wherein the controller is configured to:
receive compaction information, which represents a compaction of soil that is being ploughed during the current ploughing run; and
determine the first furrow width setting for the plough also based on the received compaction information.

11. The controller of any preceding claim, wherein the controller is configured to:
receive humidity information, which represents the humidity of the air in the vicinity of the plough during the current ploughing run; and
determine the first furrow width setting for the plough also based on the received humidity information.

12. The controller of any preceding claim, wherein the controller is configured to:
receive residue information, which represents the amount and / or type of residue in soil that is being ploughed during the current ploughing run; and
determine the first furrow width setting for the plough also based on the received residue information.

13. A plough system comprising:
a plough;
the controller of any preceding claim; and
a sensor system configured to provide the adjacent last furrow information to the controller.

14. The plough system of claim 13, wherein the sensor system comprises:
an imaging sensor that is configured to acquire images of the last furrow of an earlier ploughing run that is adjacent to the furrows being created as part of a current ploughing run; and
a processor configured to process the acquired images in order to determine the adjacent last furrow information.

15. A computer implemented method of operating a plough that is being propelled by a tractor, the method comprising:
receiving adjacent last furrow information, which represents the width and / or depth of the last furrow of an earlier ploughing run that is adjacent to the furrows being created as part of a current ploughing run; and
determining a first furrow width setting for the plough based on the received adjacent last furrow information in order to overfill or underfill the last furrow of the earlier ploughing run that is adjacent to the furrows being created as part of the current ploughing run.
